# FASCICULE DE BREVET EUROPEEN

(11) **EP 2 715 909 B1**
(45) Date de publication et mention de la délivrance du brevet: **01.07.2015**
(21) Numéro de dépôt: 12728690.4
(22) Date de dépôt: 15.05.2012
(51) Int. Cl.: B60L 1/08, B60L 7/14, B60L 11/14, B60L 11/18, H02J 7/00, H02J 7/14, B60L 1/00

(54) **PROCEDE DE RECHARGEMENT D'UN COUPLE DE BATTERIES DE VEHICULE DE TENSIONS NOMINALES DIFFERENTES, ET SYSTEME ASSOCIE**
VERFAHREN ZUR WIEDERAUFLADUNG EINES FAHRZEUGBATTERIEPAARES MIT UNTERSCHIEDLICHEN NENNSPANNUNGEN UND ZUGEHÖRIGES SYSTEM
METHOD OF RECHARGING A PAIR OF VEHICLE BATTERIES OF DIFFERENT NOMINAL VOLTAGES, AND ASSOCIATED SYSTEM

(30) Priorité: 23.05.2011 FR 1154468
(43) Date de publication de la demande: 09.04.2014
(73) Titulaire: Renault S.A.S., 92100 Boulogne-Billancourt (FR)
(72) Inventeur: SAINT-LEGER, Gérard, 78000 Versailles (FR); BOUILLON, Dino, 91600 Savigny-sur-Orge (FR)
(74) Mandataire: Rougemont, Bernard
(86) Numéro de dépôt international: PCT/FR2012/051081
(87) Numéro de publication internationale: WO 2012/160292

(56) Documents cités:
- EP-A1- 1 595 748
- US-A1- 2008 111 508
- US-A1- 2008 215 199
- US-A1- 2011 001 352

## Description

L'invention se rapporte aux systèmes d'alimentation électrique de véhicules automobiles à propulsion par un moteur thermique ou à propulsion hybride thermique-électrique, et notamment aux systèmes d'alimentation électrique comprenant plusieurs batteries de types différents.

On peut en effet souhaiter utiliser différents types de batteries en parallèle afin de tirer parti par exemple de la bonne capacité d'une batterie au plomb à fournir de l'énergie pour un démarrage à froid, et de la forte énergie spécifique ainsi que de la plus grande endurance en terme de cycles de charge et de décharge d'une batterie de type lithium-ion.

La demande de brevet US 2011 00 1352 décrit ainsi un système où les deux types de batteries sont présentes, les tensions à vide et les résistances internes des deux batteries étant choisies de manière à ce que, pour une tension d'alternateur constante, ce soit de manière préférentielle la batterie au lithium qui se décharge puis se recharge, la batterie au plomb subissant ainsi un moindre nombre de cycles de charge et de décharge.

L'utilisation de la batterie au plomb est alors réservée de manière préférentielle aux phases de démarrage du véhicule.

Pour permettre d'obtenir une telle configuration, la tension maximale à vide de la batterie au lithium doit rester relativement proche de la tension maximale à vide de la batterie au plomb. La capacité énergétique maximale de la batterie au lithium s'en trouve donc limitée.

Un tel système permet d'augmenter la durée de vie de la batterie au plomb, mais oblige à limiter les performances des batteries au lithium utilisées. En outre, la tension constante de l'alternateur doit être choisie suffisamment élevée pour permettre de recharger simultanément la batterie au plomb et la batterie au lithium, ce qui induit une surconsommation de carburant par rapport à un système muni uniquement d'une batterie au plomb.

L'invention a pour but de proposer un système d'alimentation électrique d'un véhicule comprenant deux batteries, ce système permettant non seulement d'augmenter la durée de vie de la batterie au plomb, mais également de réduire la consommation moyenne en carburant du véhicule. L'invention est définie par les revendications.

A cet effet, un système d'alimentation en énergie électrique d'un véhicule, comprend :
- un réseau à courant continu, d'au moins un organe consommateur électrique, apte à être alimenté dans une gamme de tensions inférieure ou égale à une tension maximale de réseau,
- une première batterie d'accumulation électrique connectée au réseau, et présentant une première tension maximale à vide inférieure à la tension maximale de réseau,
- une seconde batterie d'accumulation électrique connectée au réseau, présentant une seconde tension maximale à vide, supérieure à la tension maximale à vide de la première batterie, et une tension minimale à vide acceptable inférieure à la tension maximale de réseau,
- un alternateur pilotable connecté au réseau, et apte à délivrer à la seconde batterie une énergie électrique sous une tension de consigne pilotable à différentes valeurs de consigne.

Le système comprend en outre une unité de gestion électronique, configurée pour imposer à l'alternateur lors du roulage du véhicule, successivement au moins deux tensions de consigne différentes, à savoir une tension basse d'alternateur qui est strictement supérieure à la première tension maximale à vide de la première batterie, et une tension haute d'alternateur qui est strictement supérieure à la fois à la tension minimale à vide de la seconde batterie, et à la tension basse d'alternateur. Selon certaines variantes de réalisation, l'alternateur peut être un système d'alternateur comprenant un alternateur associé à un transformateur CC/CC (courant continu/courant continu, encore appelé « DC/DC converter» en anglais). L'alternateur peut alors être pilotable lui-même en tension. Selon un autre mode de réalisation, la tension de consigne peut être pilotable en modifiant uniquement la consigne du transformateur CC/CC, l'alternateur n'étant pas pilotable en tension. Selon encore un autre mode de réalisation, la tension de consigne peut être pilotable en modifiant à la fois la tension délivrée par l'alternateur et la consigne du transformateur CC/CC.

Selon un mode de réalisation amélioré, le système comporte en outre un transformateur de tension de type CC/CC apte à abaisser la tension délivrée par la seconde batterie au réseau. La seconde tension de fonctionnement à charge complète de la seconde batterie peut alors être supérieure à la tension maximale de réseau.

Avantageusement le transformateur de tension est bidirectionnel, et est apte à alimenter la seconde batterie à une tension supérieure à la tension maximale du réseau quand l'alternateur débite un courant sous la tension haute d'alternateur.

La première batterie peut être une batterie au plomb, et la seconde batterie peut être une batterie au lithium, en particulier une batterie de type lithium-ion. La seconde batterie peut également être une batterie au plomb (classique ou au plomb renforcé ou encore VRLA d'après l'anglais « Valve Regulated Lead Acide Battery ») de caractéristiques différentes de la première batterie.

L'unité de gestion électronique peut être configurée pour ouvrir un interrupteur de la seconde batterie quand le véhicule est dans un mode parking, c'est-à-dire moteur arrêté, et peut être configurée, si la tension de la première batterie passe sous un premier seuil et simultanément la tension de la seconde batterie est au dessus d'un second seuil, pour refermer cet interrupteur pendant une période prédéterminée avant d'effectuer le démarrage suivant du véhicule. Cette période prédéterminée permet de recharger partiellement la première batterie.

Selon un autre aspect, dans un procédé de gestion d'un véhicule automobile équipé d'une première batterie et d'une seconde batterie d'alimentation en énergie électrique, les deux batteries présentant des tensions maximales à vides différentes et étant connectées à un même alternateur et à un même réseau électrique à courant continu du véhicule, on impose une tension basse d'alternateur pendant des premières phases de roulage du véhicule, et l'on impose une tension haute d'alternateur plus élevée que la tension basse d'alternateur pendant des secondes phases de roulage du véhicule telles que des phases de freinage récupératif, moins consommatrices en carburant que les premières phases. Les premières phases de roulage correspondent à des phases de roulage hors décélération. Avantageusement, ce procédé peut être appliqué à un véhicule automobile où la première batterie, la seconde batterie et l'alternateur sont branchés en parallèle.

De manière préférentielle, on impose la tension haute d'alternateur quand le véhicule est en phase de décélération récupérative, et on impose la tension basse d'alternateur quand le véhicule est dans une phase d'accélération du moteur.

On peut imposer une tension intermédiaire d'alternateur, strictement supérieure à la tension basse d'alternateur et inférieure ou égale à la tension haute d'alternateur, quand un niveau de charge de la seconde batterie devient inférieur à une charge seuil, et/ou quand un certain mode de roulage du véhicule autre que la décélération, est détecté, et/ou si le courant délivré par la seconde batterie au réseau dépasse un certain seuil. Le niveau de la tension intermédiaire d'alternateur peut être différent dans les différents cas cités.

On peut par exemple alimenter la seconde batterie à l'aide d'un transformateur CC/CC en amenant la tension aux bornes de la batterie à une valeur comprise entre 15V et 17V pendant les phases de décélération récupérative du véhicule.

Le système peut comprendre des panneaux solaires embarqués sur le véhicule, et connectés au réseau.

Le système peut également comprendre une prise électrique adaptée pour un rechargement de la seconde batterie sur un réseau extérieur au véhicule.

Selon un mode de réalisation préféré, la seconde batterie peut être une batterie au lithium reconditionnée ayant déjà servi à fournir de l'énergie de propulsion automobile. Typiquement la seconde batterie au lithium est composée de deux modules « usés » d'une batterie de traction pour véhicule électrique, c'est-à-dire dont l'état de charge est compris entre 70% et 80% de leur capacité initiale. Le système selon l'invention utilise ces modules dans une plage de tension correspondant à un état de charge compris entre 5% et 30% de leur capacité initiale. Pour ne pas décharger ces modules en deçà de leur état de charge d'utilisation, un commutateur est placé entre la batterie au lithium et le reste du système, ce commutateur étant ouvert dès que l'état de charge de la batterie atteint un état de charge de 5% et n'est plus rechargée par le système selon l'invention, donc typiquement en mode « parking », c'est-à-dire lorsque le moteur du véhicule est arrêté.

L'unité de gestion électronique peut par exemple être configurée pour imposer une tension basse d'alternateur qui est inférieure ou égale à 1,05 fois la tension maximale à vide de la première batterie, voire inférieure à 1,035 fois la tension maximale à vide de la première batterie.

La tension basse d'alternateur peut par exemple être comprise entre 12,8 et 13,5V, et la tension haute d'alternateur peut être comprise entre 14 et 15V.

Selon un mode de réalisation avantageux, on peut alimenter la seconde batterie à l'aide d'un transformateur CC/CC en amenant la tension aux bornes de la batterie à une valeur comprise entre 15V et 17V pendant les phases de décélération récupérative du véhicule.

D'autres buts, caractéristiques et avantages de l'invention apparaîtront à la lecture de la description suivante, donnée uniquement à titre d'exemple nullement limitatif, et faite en référence aux dessins annexés, sur lesquels :
- la figure 1 est une représentation schématique d'un système d'alimentation selon l'invention,
- la figure 2 est un graphique représentant les niveaux relatifs de différentes tensions intervenant dans le fonctionnement du système d'alimentation de la figure 1,
- la figure 3 est un algorithme illustrant un mode de gestion possible du système d'alimentation de la figure 1.

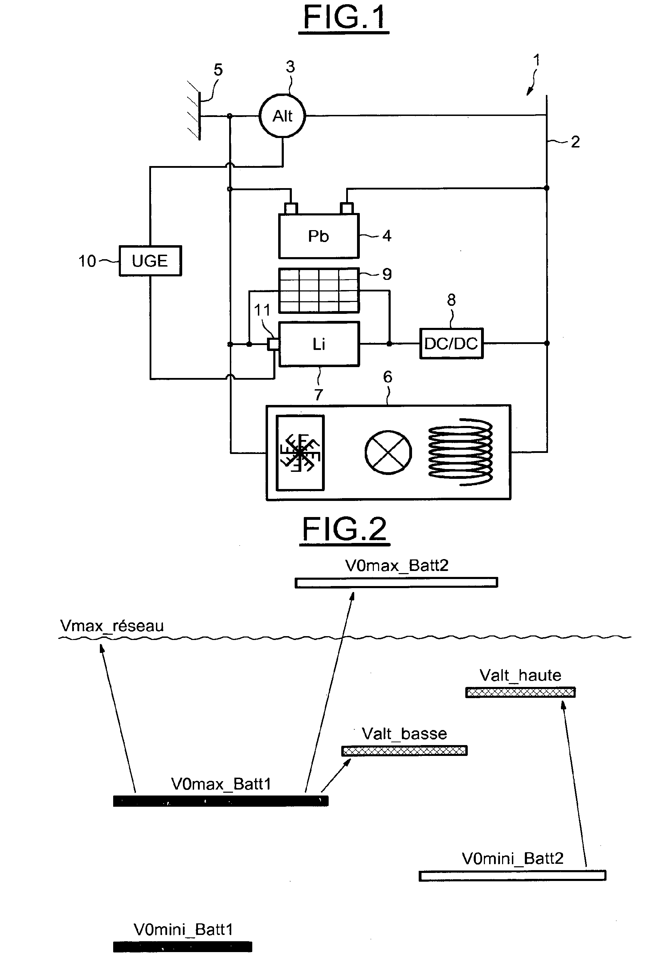

Tel qu'illustré sur la figure 1, un système 1 d'alimentation électrique d'un véhicule comprend un réseau électrique 2, un alternateur 3, une première batterie 4, par exemple une batterie au plomb, une seconde batterie 7, par exemple une batterie de type lithium-ion, et une unité de gestion électronique 10. La seconde batterie 7 est munie d'un interrupteur 11 permettant de la déconnecter du réseau 2. L'alternateur 3 est apte à convertir de l'énergie mécanique prélevée sur un arbre relié à un moteur thermique (non représenté) en énergie électrique envoyée sur le réseau électrique 2.

Sur le réseau électrique 2 sont disposés des consommateurs électriques 6, comme par exemple un dispositif de climatisation, des moyens d'éclairage et des moyens de chauffage. L'alternateur 3 est connecté aux bornes de la première batterie 4. La seconde batterie 7 est connectée en parallèle à la première batterie 4. Les consommateurs électriques 6 sont branchés en parallèle sur le réseau 2. Le réseau 2 comprend une mise à la masse 5 sur le châssis du véhicule. Le réseau 2 alimente également un démarreur apte à lancer le moteur thermique du véhicule afin d'initier le premier cycle de combustion.

Selon les variantes de réalisation, la seconde batterie 7 peut être reliée à un transformateur CC/CC 8 connecté en série à la batterie 7, de manière à ce que la tension aux bornes de la seconde batterie 7 puisse être plus élevée que la tension maximum du réseau 2.

Dans les variantes de réalisation où la seconde batterie 7 est associée à un transformateur de type CC/CC 8, des moyens de production d'énergie tels que des panneaux solaires 9 peuvent être branchés aux bornes de la seconde batterie 7, ce qui autorise la tension maximale délivrée par ces panneaux solaires 9 à être plus élevée que la tension maximum du réseau 2. L'unité de gestion électronique est reliée à l'alternateur 3, auquel elle est apte à imposer une tension de consigne variable et notamment, auquel elle est apte à imposer deux valeurs distinctes de valeurs de consigne, une première valeur notée Valt_basse et une seconde valeur notée Valt_haute plus élevée que la première valeur.

L'unité de gestion électronique 10 est également reliée à l'interrupteur 11 qui, peut être de type mécanique-électromagnétique, ou de type électronique, par exemple sous forme d'un transistor. En ouvrant l'interrupteur 11, l'unité de gestion électronique 10 peut déconnecter la seconde batterie 7 du réseau, et éviter une décharge intempestive de cette seconde batterie 7.

La première batterie, notamment si la première batterie est une batterie au plomb, peut être utilisée de manière préférentielle au moment des démarrages du moteur thermique du véhicule, pour alimenter un démarreur. L'unité de gestion électronique 10 déconnecte la seconde batterie 7 (par exemple une batterie lithium, et plus précisément de type lithium-ion) à l'aide de l'interrupteur 11, dès que le véhicule est en mode « parking ». On évite de cette manière de décharger la batterie 7. La seconde batterie 7 reste alors déconnectée du réseau jusqu'à ce que le prochain démarrage du moteur du véhicule ait été effectué.

Les batteries au plomb ont en effet une excellente capacité de démarrage à froid, et c'est donc la première batterie 4 au plomb qui est utilisée au moment du démarrage du moteur thermique du véhicule.

Les batteries au lithium ont une meilleure endurance en terme de cyclages, et c'est donc la seconde batterie qui est utilisée pour alimenter le réseau de bord du véhicule pendant le roulage du véhicule. La tension du réseau c'est-à-dire la tension mesurable entre les bornes de la première batterie 4, est imposée par celui des trois éléments, parmi l'alternateur 3, la première batterie 4 et la deuxième batterie 7 éventuellement associée à un transformateur CC/CC, qui présente entre ses deux bornes la tension la plus élevée.

Par « bornes » de chacun des éléments, on entend les deux points de connexion de cet élément au réseau 2.

Dans le cas où le système inclut un transformateur CC/CC 8, connecté comme décrit sur la figure 1, on entend par tension aux bornes de l'ensemble [seconde batterie 7, transformateur CC/CC 8], la tension entre les deux points de connexion de cet ensemble, au réseau 2.

Quand l'alternateur 3 ne tourne pas, par exemple au moment du démarrage du véhicule, et que la seconde batterie 7 est déconnectée au moyen de l'interrupteur 11, c'est la première batterie 4 qui impose la tension sur le réseau 2.

Quand le véhicule roule et que l'alternateur 3 fonctionne, on choisit de piloter la consigne de tension de l'alternateur 3 au dessus de la tension maximale à vide de la première batterie 4. De cette manière, ce n'est pas la première batterie 4 qui fournit l'énergie électrique du circuit 2. Selon que la tension de l'alternateur 3 est plus élevée ou plus basse que la tension de la seconde batterie 7, ce sera alors soit l'alternateur 3, soit la seconde batterie 7, soit les deux simultanément, qui fourniront l'énergie électrique du réseau 2.

Dans le cadre de l'invention, on choisit une seconde batterie 7 dont la tension maximale à vide est suffisamment supérieure à la tension maximale à vide de la première batterie 4, de manière à pouvoir imposer alternativement deux modes de fonctionnement. Dans le premier mode de fonctionnement, la tension d'alternateur est fixée à une valeur basse « Valt_basse », qui est supérieure à la tension à vide maximale de la première batterie « V0max_batt1 », elle-même inférieure à la tension maximale tolérée par le réseau « Vmax_réseau ». La tension d'alternateur « Valt_basse » est inférieure à la tension maximale à vide de la seconde batterie 7 « V0max_batt2 ». Dans un second mode de fonctionnement, la tension d'alternateur est égale à une valeur haute de tension d'alternateur « Valt_haute », qui est supérieure à la tension basse d'alternateur, tout en restant inférieure à la tension maximale tolérée par le réseau.

De cette manière, quand l'alternateur 3 est régulé pour délivrer la tension basse d'alternateur, et que la seconde batterie 7 est suffisamment chargée pour que sa tension soit supérieure à la tension basse d'alternateur, c'est la seconde batterie 7 qui fournit l'énergie électrique au réseau 2. Quand, dans ce mode de fonctionnement, la tension de fonctionnement de la seconde batterie 7 descend au niveau de la tension basse d'alternateur, une partie de l'énergie électrique du réseau 2 est fournie par la seconde batterie 7, et une partie de l'énergie électrique est fournie par l'alternateur 3.

Quand l'unité de gestion électronique 10 impose le second mode de fonctionnement, où c'est la tension haute d'alternateur qui est imposée, si la tension à vide de la seconde batterie est inférieure à la tension haute d'alternateur, c'est alors l'alternateur qui fournit l'énergie électrique au réseau et qui fournit simultanément une énergie permettant la recharge de la seconde batterie 7.

Si aucun autre moyen que l'alternateur 3 n'est prévu pour recharger la seconde batterie 7, la seconde batterie 7 pourra donc se recharger pendant les phases où c'est la tension haute d'alternateur qui est imposée, et pourra fournir de l'énergie au réseau tant que sa tension restera supérieure à la tension basse d'alternateur, pendant les phases où l'unité de gestion électronique 10 impose la tension basse d'alternateur.

On impose de préférence une tension basse d'alternateur tout juste supérieure à la tension maximale à vide de la première batterie, de manière à ce que, pendant les phases où la tension basse d'alternateur est imposée, l'alternateur prélève le moins possible d'énergie mécanique sur l'arbre moteur entraîné par le moteur thermique. L'alternateur ne crée ainsi qu'une surconsommation limitée de carburant, tout en assurant que la première batterie reste constamment chargée à son niveau maximal.

Dans le premier mode de fonctionnement, tant que la seconde batterie 7 est suffisamment chargée (c'est-à-dire tant que sa tension est supérieure à la tension basse d'alternateur), c'est la seconde batterie 7 qui fournit l'énergie électrique au réseau 2.

Les phases où l'on impose la tension haute d'alternateur en vue de recharger la seconde batterie 7, sont de préférence les phases de roulage à faible coût en carburant, par exemple les phases de décélération récupérative, c'est-à-dire si le véhicule est dans un mode de décélération permettant d'utiliser le frein moteur, et d'utiliser une partie de l'énergie mécanique de l'arbre moteur pour faire tourner l'alternateur. Il suffit par exemple pour cela que la consigne à la pédale du véhicule corresponde à une phase de décélération moteur.

Une partie de l'énergie cinétique de freinage du véhicule sert alors à recharger la seconde batterie 7. Cette énergie récupérée pendant les phases de freinage permet ensuite d'économiser du carburant, en limitant la tension d'alternateur imposée pendant les phases de roulage correspondant au premier mode de fonctionnement.

La figure 2 illustre un exemple de positionnement relatif des différentes valeurs de tensions mentionnées précédemment dans la description du système d'alimentation électrique 1. Les différents niveaux représentés sur la figure 2 illustrent la tension minimale à vide de la première batterie 4 soit V0mini_batt1, la tension maximale à vide de la première batterie 4 soit V0max_batt1, la tension minimale à vide V0mini_batt2 de la seconde batterie 7, la tension maximale à vide V0max_batt2 de la seconde batterie, la tension basse d'alternateur Valt_basse, la tension haute d'alternateur Valt_haute et la tension maximale Vmax_réseau que le réseau 2 est capable de supporter sans être endommagé.

De manière typique, si l'on fonctionne avec une batterie au plomb comme première batterie 4, et avec, comme seconde batterie, une batterie de type lithium-ion issue de la récupération de batteries lithium-ion ayant servi à propulser des véhicules électriques ou hybrides, la tension minimale à vide V0mini_batt1 de la première batterie au plomb est de l'ordre de 12 volts, et correspond sensiblement à la tension minimale à vide V0mini_batt2 de la seconde batterie au lithium, ou est un peu inférieure.

La tension maximale à vide V0max_batt1 de la première batterie au plomb est de l'ordre de 12,8 volts, et la tension basse d'alternateur Valt_basse que l'on impose pour être juste au dessus de cette tension maximale à vide est de l'ordre de 13,2 volts.

La tension maximale à vide V0max_batt2 de la seconde batterie au lithium peut être de l'ordre de 16,8 volts, et la tension haute d'alternateur Valt_haute de l'ordre de 15 volts afin de rester en dessous de la valeur maximale acceptée par le réseau Vmax_réseau, qui elle, est de l'ordre de 16 volts.

Il est envisageable d'utiliser d'autres types de batterie pour la première et pour la seconde batterie, et la tension maximale de la seconde batterie n'est pas obligatoirement supérieure à la tension maximale du réseau. La tension basse d'alternateur doit de préférence être supérieure à la tension maximale à vide de la première batterie. On pourrait éventuellement envisager un mode de réalisation où la tension basse d'alternateur serait très légèrement inférieure à la tension maximale à vide de la première batterie, mais on imposerait alors inutilement des cycles de charge et de décharge à la première batterie en réduisant la durée de vie de celle-ci.

La tension maximale de la seconde batterie devra être obligatoirement supérieure à la tension maximale à vide de la première batterie, de manière à pouvoir définir une valeur de tension basse d'alternateur entre ces deux valeurs de tension maximale à vide des deux batteries.

La tension haute d'alternateur peut être égale, voire supérieure à la tension maximale à vide de la seconde batterie, par exemple si la tension maximale de la seconde batterie est inférieure à la tension maximale tolérée par le réseau.

La tension minimale à vide de la seconde batterie doit être inférieure à la tension haute d'alternateur afin de permettre une charge au moins partielle de la seconde batterie 7 pendant les phases de fonctionnement avec la tension haute d'alternateur.

La seconde batterie 7 peut être rechargée, outre pendant les phases où l'alternateur tourne à sa valeur de tension élevée, par des moyens de production électriques supplémentaires tels que les panneaux solaires 9. Dans le cas où la tension maximale à vide de la seconde batterie est inférieure à la tension maximale tolérée par le réseau, ou dans le cas où le système comprend un transformateur CC/CC apte à abaisser la tension délivrée par la seconde batterie à une tension inférieure à la tension maximale tolérée par le réseau, on peut également envisager de recharger la seconde batterie 7 sur un réseau extérieur au véhicule, par exemple sur une aire de stationnement.

La tension maximale à vide de la seconde batterie 7, c'est-à-dire V0max_batt2, peut être inférieure ou supérieure à la tension maximale acceptée par le réseau 2. Si la tension maximale à vide de la seconde batterie est supérieure à la tension maximale acceptée par le réseau Vmax_réseau, selon une première variante de réalisation, on exploite la seconde batterie 7 sur une partie seulement de son domaine de fonctionnement c'est-à-dire par exemple entre la tension basse d'alternateur et la tension haute d'alternateur.

Selon une seconde variante de fonctionnement, on peut exploiter la seconde batterie 7 sur un domaine plus large, par exemple entre la tension basse d'alternateur et la tension maximale à vide acceptée par la seconde batterie 7, si par exemple le système est muni d'un transformateur CC/CC 8, apte à abaisser la tension délivrée par la seconde batterie 7 de manière à l'amener à une valeur inférieure ou égale à la tension maximale tolérée par le réseau.

Dans ce cas, on peut par exemple envisager de charge la seconde batterie 7 à sa tension maximale à vide à partir d'un réseau extérieur au véhicule, quand le véhicule est à l'arrêt. On utilise ensuite cette réserve d'énergie pendant le roulage du véhicule en la complétant par une recharge partielle de la batterie à une tension haute d'alternateur quand le véhicule est en décélération récupérative.

Si le transformateur CC/CC est bidirectionnel, on peut même envisager de charger la seconde batterie à sa tension maximale à vide en élevant la tension aux bornes de la seconde batterie 7 par rapport à la tension haute d'alternateur pendant les phases de décélération récupérative.

Par sécurité, afin d'éviter une décharge même partielle de la première batterie 4, la tension basse d'alternateur est choisie légèrement supérieure à la tension maximale à vide de la première batterie 4.

La tension minimale à vide de la seconde batterie 7 est de préférence inférieure à la tension basse d'alternateur de manière à ce que, lorsque le véhicule est dans un mode de roulage où la tension basse d'alternateur est imposée par l'unité de gestion électronique 10, l'énergie fournie par l'alternateur vienne automatiquement compléter l'énergie fournie par la seconde batterie 7 lorsque la tension de celle-ci vient à baisser. On évite ainsi que la tension de la seconde batterie 7 puisse descendre à la tension minimale tolérée V0mini_batt2.

On pourrait envisager des variantes de réalisation où la tension minimale à vide de la seconde batterie serait supérieure à la tension basse d'alternateur, mais il faut pour une telle variante que l'unité de gestion électronique 10 impose une tension haute d'alternateur avant que la tension de la seconde batterie 7 ne descende en dessous de sa valeur minimale. Il faut, dans tous les cas, que la tension minimale à vide de la seconde batterie 7 soit inférieure à la tension haute d'alternateur.

La tension basse d'alternateur est de préférence inférieure à la tension maximale à vide de la seconde batterie 7. Elle est aussi proche que possible, par valeur supérieure, de la tension maximale à vide de la première batterie, tout en gardant une marge d'écart afin d'être sûr que l'alternateur régulé en tension basse d'alternateur reste au dessus de cette valeur minimale V0max_batt1.

Il est avantageux d'utiliser une seconde batterie 7 dont la tension maximale à vide V0max_batt2 est supérieure à la tension maximale Vmax_réseau du réseau 2, ce qui permet, pour choisir les valeurs de la tension basse d'alternateur et de la tension haute d'alternateur, de disposer de tout l'intervalle de tension compris entre la tension maximale à vide de la première batterie V0max_battl et la tension maximale acceptée par le réseau Vmax_réseau.

On se trouve en particulier dans cette configuration lorsque l'on a un réseau 2 du véhicule dont la tension maximale acceptable est de l'ordre de 15 à 16 volts, et que l'on utilise comme première batterie 4 une batterie au plomb, dont la tension maximale à vide est d'environ 12,8 volts, et une batterie lithium-ion pour la seconde batterie 7, par exemple une batterie lithium-ion reconditionnée suite à une utilisation pour la propulsion de véhicule électrique. Une telle batterie reconditionnée présente par exemple une tension maximale à vide de l'ordre de 16,8 volts et une tension minimale à vide acceptable voisine de 12 volts.

Outre le basculement à une tension d'alternateur haute pendant les phases de décélération du véhicule, des stratégies complémentaires implémentées dans l'unité de gestion électronique 10 peuvent être définies, afin d'éviter une décharge excessive de la seconde batterie 7 dans les cas de figure où les phases de décélération récupérative ne sont pas suffisamment fréquentes et/ou suffisamment prolongées.

On peut alors choisir d'imposer une tension d'alternateur intermédiaire entre la tension basse d'alternateur et la tension haute d'alternateur, c'est-à-dire strictement supérieure à la tension basse d'alternateur et inférieures ou égales à la tension haute d'alternateur. Une ou plusieurs tensions intermédiaires peuvent ainsi être imposées pendant certaines phases de roulage qui peuvent laisser supposer que les prochaines décélérations sont éloignées dans le temps. Ces phases de roulage peuvent comprendre des modes de roulage de type autoroutier. Une ou plusieurs tensions intermédiaires peuvent également être imposées pour des modes de roulage préprogrammés dans l'unité de gestion électronique parce que le point de fonctionnement du moteur, pour ces modes de roulage, correspond à une consommation en carburant moins élevée que pour d'autres modes de roulage.

Le basculement vers une tension intermédiaire d'alternateur peut également être conditionné par la détection simultanée d'un mode de roulage donné, et d'un état de charge inférieur ou égal à un état de charge seuil de la seconde batterie 7.

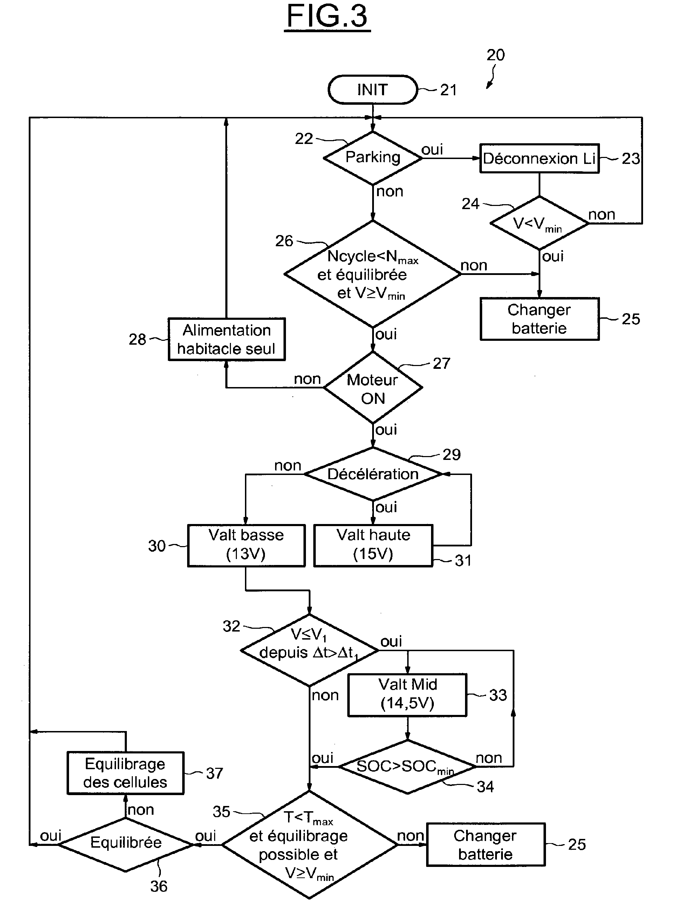

La figure 3 illustre un algorithme 1 qui peut être implanté dans l'unité de gestion électronique 10 d'un système d'alimentation en énergie selon l'invention. A un instant initial 21, correspondant par exemple à la mise en service du véhicule ou à sa remise en service après un changement de batteries, l'unité de gestion électronique 10 teste, à une étape 22, si le véhicule est en mode parking.

Si c'est le cas, l'unité de gestion électronique 10 déconnecte, si ce n'est déjà fait, la seconde batterie 7 du réseau 2 à l'aide de l'interrupteur 11, à une étape 23.

Elle teste ensuite à une étape 24, si la tension aux bornes de la seconde batterie 7 est descendue en dessous d'une tension Vmin qui peut, par exemple, être égale à la tension minimale à vide V0mini_batt2 de la seconde batterie, ou être une valeur légèrement supérieure à cette tension minimale à vide.

Si la tension mesurée est inférieure à la tension seuil Vmin, l'unité de gestion électronique 10 affiche un message d'alerte avertissant le conducteur qu'il doit changer la seconde batterie 7, à une étape 25. Si la tension est supérieure à la tension seuil Vmin, l'unité de gestion électronique retourne à l'étape 22.

Quand le test 22 indique que le véhicule n'est plus en configuration de parking, l'unité de gestion électronique 10 teste à une étape 26 la santé de la seconde batterie 7. Ce test de santé peut par exemple consister à vérifier si le nombre de cycles de charges et de décharges déjà subies par la seconde batterie 7 est inférieur à un nombre seuil Nmax de charges et de décharges, si les différentes cellules de la batterie sont suffisamment équilibrées, et si la tension aux bornes de la batterie est supérieure ou égale à la tension seuil Vmin.

Si la réponse est négative, l'unité de gestion électronique 10 affiche le message d'alerte correspondant à l'étape 25. Si le résultat du test 26 est positif, l'unité de gestion électronique effectue un test 27 pour savoir si le moteur thermique du véhicule est actif. Si ce n'est pas le cas, l'unité de gestion électronique 10 met en place une stratégie 28 permettant d'alimenter le réseau 2 soit à partir de la première batterie, soit à partir de la seconde batterie, soit à partir des deux batteries conjointement, puis retourne à l'étape 22.

Lorsque le test 27 indique que le moteur thermique du véhicule est actif, l'unité de gestion électronique teste à une étape 29 si le véhicule est dans un mode de décélération récupérative, c'est-à-dire si le véhicule est dans un mode de décélération permettant d'utiliser le frein moteur, en puisant une partie de l'énergie mécanique de l'arbre moteur pour faire tourner l'alternateur. Il suffit par exemple pour cela que la consigne à la pédale du véhicule corresponde à une phase de décélération moteur.

Si le véhicule est en mode de décélération récupérative, l'unité de gestion électronique 10 impose à l'alternateur une tension haute d'alternateur, par exemple 15 volts, à une étape 31, et continue à boucler sur le test 29 puis sur le pilotage à la tension haute d'alternateur 31, tant que le véhicule est en décélération.

Si le véhicule n'est pas en décélération récupérative à la sortie de l'étape de test 29, l'unité de gestion électronique 10 impose à l'alternateur 3 de fonctionner à la tension basse d'alternateur, par exemple à 13 volts, à une étape 30.

Suite à l'étape 30, l'unité de gestion électronique 10 teste si le véhicule et la seconde batterie 7 sont dans une configuration « de charge forcée ». Une telle configuration de charge forcée peut par exemple correspondre au cas où la tension aux bornes de la seconde batterie 7 descend en dessous d'une valeur seuil V₁ et où simultanément un compteur de temps Δt, qui comptabilise le temps écoulé depuis la dernière décélération, passe au dessus d'un seuil Δt₁.

Dans ce cas de figure, on peut considérer que la tension de la seconde batterie commence à devenir insuffisante, et que le mode de roulage détecté n'est pas un mode de roulage ponctué de décélérations suffisamment fréquentes.

Si ce test 32 révèle que l'on se trouve dans la configuration de marche forcée, l'unité de gestion électronique 10 impose, à une étape 33, une régulation de l'alternateur 3 à une tension Valt Mid par exemple égale à 14,5 volts, et continue à imposer ce mode de charge forcée tant que le niveau de recharge de la batterie testé à une étape 34 n'a pas atteint un niveau satisfaisant minimal SOCₘᵢₙ.

Ce niveau de charge minimal peut par exemple être détecté par une baisse du courant de recharge entrant dans la seconde batterie 7.

Quand le test de l'étape 34 indique que le niveau de recharge de la seconde batterie est suffisant, l'unité de gestion électronique 10 teste à une étape 35 la santé de la seconde batterie 7, par exemple en vérifiant que la température de la batterie ne dépasse pas une température Tₘₐₓ maximale, en vérifiant que le niveau d'équilibrage entre les différentes cellules est suffisant, ou à défaut que ce niveau permet encore de rééquilibrer les différentes cellules, et en vérifiant que la tension V aux bornes de la seconde batterie est supérieure à la tension seuil Vₘᵢₙ.

Si le niveau de santé détecté à l'étape 35 est insuffisant, l'unité de gestion électronique 10 affiche le message d'alerte correspondant à l'étape 25. Dans le cas contraire, l'unité de gestion électronique 10 teste à une étape 36 si les différentes cellules de la seconde batterie 7 sont suffisamment équilibrées. Si c'est le cas, l'unité de gestion électronique revient à l'étape de test 22 permettant de vérifier si le véhicule, entre temps, se trouve en mode parking.

Dans le cas contraire, l'unité de gestion électronique déclenche un équilibrage des cellules à une étape 37 et retourne également à l'étape 22.

L'objet de l'invention ne se limite pas aux exemples de réalisation décrits et peut faire l'objet de nombreuses variantes, aussi bien en ce qui concerne l'agencement des différents éléments du système 1, les algorithmes de fonctionnement implantés dans l'unité de gestion électronique 10 et/ou le choix des types de batteries ou autres types d'accumulateurs.

La tension basse et la tension haute imposées aux bornes de la seconde batterie 7, peuvent être obtenues soit en régulant la tension délivrée par l'alternateur à deux niveaux différents, soit en élevant la tension aux bornes de la seconde batterie à l'aide d'un transformateur CC/CC. La tension haute peut également être obtenue en élevant à la fois la tension de consigne aux bornes de l'alternateur et en transformant cette tension, à l'aide du transformateur CC/CC, en une tension encore plus élevée aux bornes de la seconde batterie.

L'algorithme de fonctionnement, dont un exemple est donné en figure 3, admet de très nombreuses variantes, notamment en ce qui concerne la succession des différents tests pour déterminer quelle tension d'alternateur doit être imposée à un instant donné, ou dans la définition d'un ou de plusieurs modes de charge forcée. Ces modes de charge forcée peuvent être définis avec différentes tensions d'alternateur Valt Mid selon les modes. On peut par exemple définir différents modes de charge forcée suivant différentes conditions de niveau de charge de la seconde batterie et différentes conditions de type de roulage et/ou de point de fonctionnement du moteur détecté.

Les accumulateurs électriques désignés sous le terme de première et seconde batterie peuvent être des batteries d'accumulation de type électrochimique, par exemple une première batterie au plomb et une seconde batterie de type lithium-ion. On peut également envisager d'utiliser pour la seconde batterie d'autres types de batteries lithium que les batteries lithium-ion, d'autres batteries de type électrochimique ou encore un ou plusieurs supercondensateurs.

L'invention peut être utilisée pour un système d'alimentation d'un véhicule à propulsion par un moteur thermique. Elle peut également être utilisée pour un système d'alimentation électrique d'un véhicule à propulsion hybride thermique électrique. Dans ce dernier cas, on peut par exemple utiliser une batterie au lithium comme première batterie servant à la fois pour le démarrage du véhicule et pour la propulsion occasionnelle du véhicule, et une seconde batterie de type supercapacité pour accumuler de l'énergie pendant les phases de décélération. Il faut donc comprendre dans cette demande le terme « batterie d'accumulation électrique » au sens large puisqu'il englobe des systèmes de stockage de type supercapacité.

Le système selon l'invention permet de réduire la consommation globale en carburant du véhicule, de prolonger la durée de vie de la première batterie, et, dans le cas où on utilise comme seconde batterie une batterie au lithium reconditionnée, de réduire le coût et l'empreinte écologique du système.

Il est à noter que le concept d'utilisation de deux batteries pour des usages différents peut être élargi à plus de deux batteries. En effet il est enviseageable d'utiliser également une troisième batterie connectée au réseau de bord par l'intermédiaire d'un convertisseur CC/CC et d'un commutateur, ce commutateur étant fermé en mode « parking » c'est-à-dire moteur arrêté, pour fournir l'énergie électrique nécessaire aux consommateurs du réseau de bord. Avantageusement cette troisième batterie est constituée de modules récupérés d'une batterie de traction de véhicule électrique, bénéficie des meilleurs points de rendement du moteur et de l'alternateur pour être rechargée (par exemple en décélération, de la même manière que la deuxième batterie au lithium), et bénéficie d'un système de recharge complémentaire tel qu'un panneau solaire.

De même la première batterie plomb utilisée pour le démarrage du véhicule, peut être connectée au réseau de bord par l'intermédiaire d'un commutateur, permettant de spécialiser encore plus son utilisation : ce commutateur est par exemple fermé seulement au démarrage, et sur les meilleurs points de rendement du moteur et de l'alternateur lorsque son état de charge est en dessous d'un certain seuil.

Il est à noter que l'utilisation d'un commutateur entre d'une part une première batterie et le réseau de bord et d'autre part une deuxième batterie et le réseau de bord permet d'utiliser pour ces deux batteries des batteries plomb identiques connectées en parallèle de l'alternateur sans CC/CC intermédiaire tout en leur attribuant un rôle spécifique (démarrage pour l'une, consommation du réseau de bord pour l'autre) et en les faisant recharger aux meilleurs points de rendement du moteur et de l'alternateur.

## Revendications

1. Système (1) d'alimentation en énergie électrique d'un véhicule, comprenant :
- un réseau (2) à courant continu, d'au moins un organe (6) consommateur électrique, apte à être alimenté dans une gamme de tensions inférieure ou égale à une tension maximale de réseau (Vmax_réseau),
- une première batterie (4) d'accumulation électrique connectée au réseau (2), et présentant une première tension maximale à vide (V0max_Batt1) inférieure à la tension maximale de réseau (Vmax_réseau),
- une seconde batterie (7) d'accumulation électrique connectée au réseau (2), présentant une seconde tension maximale à vide (V0max_Batt2), supérieure à la tension maximale à vide de la première batterie (V0max_Batt1), et une tension minimale à vide acceptable (V0mini_Batt2) inférieure à la tension maximale de réseau (Vmax_réseau),
- un alternateur (3) pilotable connecté au réseau (2), et apte à délivrer à la seconde batterie (7) une énergie électrique sous une tension de consigne pilotable à différentes valeurs de consigne (Valt_basse, Valt_haute),
**caractérisé en ce que** le système comprend en outre une unité de gestion électronique (10), configurée pour imposer à l'alternateur (3) lors du roulage du véhicule, successivement au moins deux tensions de consigne différentes, à savoir une tension basse d'alternateur (Valt_basse) qui est strictement supérieure à la première tension maximale à vide de la première batterie (V0max_Batt1), et une tension haute d'alternateur (Valt_haute) qui est strictement supérieure à la fois à la tension minimale à vide de la seconde batterie (V0mini_Batt2), et à la tension basse d'alternateur (Valt_basse).

2. Système selon la revendication 1, comportant en outre un transformateur de tension (8) de type CC/CC apte à abaisser la tension délivrée par la seconde batterie (7) au réseau, et dans lequel la seconde tension maximale à vide (V0max_Batt2) de la seconde batterie (7) est supérieure à la tension maximale de réseau (Vmax_réseau).

3. Système selon la revendication 2, dans lequel le transformateur de tension (8) est bidirectionnel, et est apte à alimenter la seconde batterie (7) à une tension supérieure à la tension maximale du réseau (Vmax_réseau) quand l'alternateur (3) débite un courant sous la tension haute d'alternateur (Valt_haute).

4. Système selon l'une des revendications précédentes, dans lequel la première batterie (4) est une batterie au plomb, et la seconde batterie (7) est une batterie au lithium.

5. Système selon l'une des revendications précédentes, dans lequel l'unité de gestion électronique (10) est configurée pour ouvrir un interrupteur (11) de la seconde batterie (7) quand le moteur du véhicule est arrêté et, si la tension de la première batterie (4) passe sous un premier seuil et simultanément la tension de la seconde batterie est au dessus d'un second seuil, pour refermer cet interrupteur (11) pendant une période prédéterminée avant d'effectuer le prochain démarrage du véhicule.

6. Procédé de gestion d'un véhicule automobile équipé d'une première batterie (4) et d'une seconde batterie (7) d'alimentation en énergie électrique, les deux batteries présentant des tensions maximales à vides (V0max_Batt12, V0max_Batt2) différentes et étant connectées à un même alternateur (3) et à un même réseau électrique à courant continu du véhicule (2), **caractérisé en ce que** l'on impose une tension basse d'alternateur (Valt_basse) pendant des premières phases de roulage du véhicule, et l'on impose une tension haute d'alternateur (Valt_haute) plus élevée que la tension basse d'alternateur pendant des secondes phases de roulage du véhicule telles que des phases de freinage récupératif, moins consommatrices en carburant que les premières phases.

7. Procédé selon la revendication 6, dans lequel on impose la tension haute d'alternateur (Valt_haute) quand le véhicule est en phase de décélération récupérative, et on impose la tension basse d'alternateur (Valt_basse) quand le véhicule est dans une phase d'accélération du moteur.

8. Procédé selon les revendications 6 à 7, dans lequel on impose une tension intermédiaire d'alternateur (Valt Mid), strictement supérieure à la tension basse d'alternateur (Valt_basse) et inférieure ou égale à la tension haute d'alternateur (Valt_haute), quand un niveau de charge de la seconde batterie (7) devient inférieur à une charge seuil, et/ou quand un certain mode de roulage du véhicule autre que la décélération, est détecté, et/ou si le courant délivré par la seconde batterie (7) au réseau dépasse un certain seuil.

## Patentansprüche

1. System (1) zur Stromversorgung eines Fahrzeugs, das Folgendes umfasst:
- ein Gleichstromnetz (2) mit mindestens einem Strom verbrauchenden Organ (6), das geeignet ist, in einem Bereich von Spannungen versorgt zu werden, der niedriger oder gleich einer maximalen Netzspannung (Vmax_reseau) ist,
- eine erste Stromspeicherbatterie (4), die an das Netz (2) angeschlossen ist und eine erste maximale Leerspannung (VOmax_Batt1) aufweist, die niedriger ist als die maximale Netzspannung (Vmax_réseau),
- eine zweite Stromspeicherbatterie (7), die an das Netz (2) angeschlossen ist, die eine zweite maximale Leerspannung (V0max_Batt2) aufweist, die höher ist als die maximale Leerspannung der ersten Batterie (V0max_Batt1), und eine akzeptable minimale Leerspannung (V0mini_Batt2), die niedriger ist als die maximale Netzspannung (Vmax_reseau),
- einen steuerbaren Wechselstromgenerator (3), der an das Netz (2) angeschlossen und geeignet ist, zu der zweiten Batterie (7) eine elektrische Energie unter einer steuerbaren Sollspannung (Valt_basse, Valt_haute) mit unterschiedlichen Sollwerten zu liefern,
**dadurch gekennzeichnet, dass** das System außerdem eine elektronische Verwaltungseinheit (10) umfasst, die konfiguriert ist, um dem Wechselstromgenerator (3) beim Fahren des Fahrzeugs nacheinander mindestens zwei unterschiedliche Sollspannungen aufzuerlegen, nämlich eine niedrige Wechselstromgeneratorspannung (Valt_basse), die strikt höher ist als die erste maximale Leerspannung der ersten Batterie (V0max_Batt1), und eine hohe Wechselstromgeneratorspannung (Valt_haute), die strikt sowohl höher als die minimale Leerlaufspannung der zweiten Batterie (V0mini_Batt2) als auch als die niedrige Wechselstromgeneratorspannung (Valt_basse) ist.

2. System nach Anspruch 1, das außerdem einen Spannungstransformator (8) des Typs Gleichstrom / Gleichstrom umfasst, der geeignet ist, um die von der zweiten Batterie (7) zu dem Netz gelieferte Spannung zu senken, und wobei die zweite maximale Leerspannung (V0max_Batt2) der zweiten Batterie (7) höher ist als die maximale Netzspannung (Vmax_reseau).

3. System nach Anspruch 2, bei dem der Spannungstransformator (8) bidirektional und geeignet ist, um die zweite Batterie (7) mit einer Spannung zu versorgen, die höher ist als die maximale Netzspannung (Vmax_reseau), wenn der Wechselstromgenerator (3) einen Strom unter der oberen Wechselstromgeneratorspannung (Valt_haute) abgibt.

4. System nach einem der vorhergehenden Ansprüche, bei dem die erste Batterie (4) eine Bleibatterie ist und die zweite Batterie (7) eine Lithiumbatterie ist.

5. System nach einem der vorhergehenden Ansprüche, bei dem die elektronische Verwaltungseinheit (10) konfiguriert ist, um einen Schalter (11) der zweiten Batterie (7) zu öffnen, wenn der Motor des Fahrzeugs gestoppt wird, und, falls die Spannung der ersten Batterie (4) unter einen ersten Schwellenwert fällt, und die Spannung der zweiten Batterie gleichzeitig oberhalb eines zweiten Schwellenwerts ist, diesen Schalter (11) während einer vorbestimmten Zeitspanne wieder zu schließen, bevor das nächste Anlassen des Fahrzeugs ausgeführt wird.

6. Verfahren zur Verwaltung eines Kraftfahrzeugs, das mit einer ersten Batterie (4) und einer zweiten Batterie (7) zur Stromversorgung ausgestattet ist, wobei die zwei Batterien unterschiedliche maximale Leerlaufspannungen (V0max_Batt1, V0max_Batt2) aufweisen und an ein und denselben Wechselstromgenerator (3) und ein und dasselbe Gleichstromnetz des Fahrzeugs (2) angeschlossen sind, **dadurch gekennzeichnet, dass** während erster Fahrphasen des Fahrzeugs eine niedrige Wechselstromgeneratorspannung (Valt_basse) angelegt wird und während zweiter Fahrphasen des Fahrzeugs, wie den Nutzbremsungsphasen, die weniger Kraftstoff verbrauchen als die ersten Phasen, eine hohe Wechselstromgeneratorspannung (Valt_haute) angelegt wird, die höher ist als die niedrige Wechselstromgeneratorspannung.

7. Verfahren nach Anspruch 6, bei dem die hohe Wechselstromgeneratorspannung (Valt_haute) auferlegt wird, wenn das Fahrzeug in Nutzverlangsamungsphase ist und die niedrige Wechselstromgeneratorspannung (Valt_basse) auferlegt wird, wenn sich das Fahrzeug in einer Beschleunigungsphase des Motors befindet.

8. Verfahren nach den Ansprüchen 6 bis 7, bei dem eine Wechselstromgeneratorzwischenspannung (Valt_Mid), die strikt höher ist als die niedrige Wechselstromgeneratorspannung (Valt_basse) und niedriger oder gleich der hohen Wechselstromgeneratorspannung (Valt_haute) auferlegt wird, wenn ein Ladungsniveau der zweiten Batterie (7) niedriger wird als eine Schwellenladung, und/oder wenn ein bestimmter anderer Fahrmodus des Fahrzeugs als die Verlangsamung erfasst wird, und/oder falls der von der zweiten Batterie (7) an das Netz gelieferte Strom einen bestimmten Schwellenwert überschreitet.

## Claims

1. Electrical power supply system (1) of a vehicle, including:
- a direct-current network (2), of at least one electrically powered device (6), that can be powered by a range of voltages not exceeding a maximum network voltage (Vmax_reseau),
- a first electrical accumulation battery (4) connected to the network (2), and having a first maximum no-load voltage (V0max_Batt1) that is less than the maximum network voltage (Vmax_reseau),
- a second electrical accumulation battery (7) connected to the network (2), having a second maximum no-load voltage (V0max_Batt2) that is greater than the maximum no-load voltage of the first battery (V0max_Batt1), and an acceptable minimum no-load voltage (V0mini_Batt2) that is less than the maximum network voltage (Vmax_reseau),
- an adjustable generator (3) connected to the network (2) that is able to supply electrical energy to the second battery (7) below a setpoint voltage adjustable to different setpoint values (Valt_basse, Valt_haute),
**characterized in that** the system also includes an electronic management unit (10) configured to set the generator (3), when the vehicle is being driven, successively to at least two different setpoint voltages, specifically a low generator voltage (Valt_basse) that is necessarily greater than the first maximum no-load voltage of the first battery (V0max_Batt1) and a high generator voltage (Valt_haute), which is necessarily higher both than the minimum no-load voltage of the second battery (V0mini_Batt2) and the low generator voltage (Valt_basse).

2. System according to Claim 1, also including a DC/DC voltage transformer (8) able to lower the voltage supplied by the second battery (7) to the network, and in which the second maximum no-load voltage (V0max_Batt2) of the second battery (7) is greater than the maximum network voltage (Vmax_reseau).

3. System according to Claim 2, in which the voltage transformer (8) is bi-directional and able to power the second battery (7) at a voltage greater than the maximum network voltage (Vmax_reseau) when the generator (3) is supplying a current beneath the high generator voltage (Valt_haute).

4. System according to one of the preceding claims, in which the first battery (4) is a lead battery and the second battery (7) is a lithium battery.

5. System according to one of the preceding claims, in which the electronic management unit (10) is configured to open a switch (11) of the second battery (7) when the engine of the vehicle is stopped and, if the voltage of the first battery (4) drops beneath a first threshold and simultaneously the voltage of the second battery is above a second threshold, to close this switch (11) for a predetermined period of time before the vehicle is next started.

6. Management method of a motor vehicle fitted with a first battery (4) and a second battery (7) supplying electrical energy, the two batteries having different maximum no-load voltages (V0max_Batt1, V0max_Batt2) and being connected to a single generator (3) and to a single direct-current electrical network (2) of the vehicle, **characterized in that** a low generator voltage (Valt_basse) is set for the initial vehicle driving phases, and a high generator voltage (Valt_haute) that is higher than the low generator voltage is set for the subsequent vehicle driving phases, such as the regenerative braking phases, which consume less fuel than the initial phases.

7. Method according to Claim 6, in which the high generator voltage (Valt_haute) is set when the vehicle is in regenerative deceleration phase, and the low generator voltage (Valt_basse) is set when the vehicle is in an engine acceleration phase.

8. Method according to Claims 6 and 7, in which an intermediate generator voltage (Valt Mid), necessarily greater than the low generator voltage (Valt_basse) and less than or equal to the high generator voltage (Valt_haute), is set when a charge level of the second battery (7) drops below a threshold charge, and/or when a specific driving mode of the vehicle other than deceleration is detected, and/or if the current supplied by the second battery (7) to the network passes a given threshold.
